# EUROPÄISCHE PATENTANMELDUNG

(11) **EP 1 746 288 A2**
(43) Veröffentlichungstag der Anmeldung: **24.01.2007**
(21) Anmeldenummer: 06123309.4
(22) Anmeldetag: 06.11.2003
(51) Int. Cl.: F04B 53/00, F04B 17/03, F04B 1/04

(54) **Motor-Pumpen-Aggregat**

(30) Priorität: 11.11.2002 DE 10252622
(62) Teilanmeldung aus: 03810968.2
(71) Anmelder: Continental Teves AG & Co. oHG, 60488 Frankfurt am Main (DE)
(72) Erfinder: Bartsch, Thomas, 65527, Niedernhausen (DE); Dinkel, Dieter, 65824, Schwalbach (DE); Martin, Sven, 68723, Schwetzingen (DE); Briesewitz, Rüdiger, 63486, Bruchköbel (DE); Niescher, Axel, 60489, Frankfurt (DE)

(57) **Zusammenfassung**

Die Erfindung betrifft ein Motor-Pumpen-Aggregat 1 für ein Kraftfahrzeugbremssystem, mit einem Motor 4 und mit einer Pumpe 3, welche eine von dem Motor 4 angetriebene Welle 5 umfasst, deren Wellenende 15 in einem mit Ventilen und verbindenden Kanälen versehenen Aufnahmekörper 2 mit wenigstens einem Lager 8 drehbar gelagert ist, wobei die Welle 5 Verdrängungsmittel antreibt, die in einem druckmittelbefüllbaren Raum 11 angeordnet sind. Zur Verbesserung der Vakuumbefüllung des Bremssystems mit Druckmittel wird vorgeschlagen, dass das Wellenende 15 in einen Freiraum 16 mündet, und dass zwischen dem Freiraum 16 und dem Raum 11 wenigstens eine Verbindung 19 vorgesehen ist.

## Beschreibung

Die vorliegende Erfindung betrifft ein Motor-Pumpen-Aggregat für ein Kraftfahrzeugbremssystem, mit einem Motor und mit einer Pumpe, welche eine von dem Motor angetriebene Welle umfasst, deren Wellenende in einem mit Ventilen und verbindenden Kanälen versehenen Aufnahmekörper mit wenigstens einem Lager drehbar gelagert ist, wobei die Welle Verdrängungsmittel antreibt, die in einen Kurbelraum reichen, und wobei das Lager vor einem Lagerschild des Motors zwischen Kurbelraum und Lagerschild vorgesehen ist.

Ein derartiges Motor-Pumpen-Aggregat ist grundsätzlich bekannt. Generell erfolgt die Befüllung eines Kraftfahrzeugbremssystems mit dem erforderlichen Druckmittel nach Montage der einzelnen Systemkomponenten wie insbesondere einem Hauptbremszylinder, einem Rohr- und Schlauchleitungssystem, dem Motor-Pumpen-Aggregat sowie Radbremsen beim Fahrzeughersteller. Zu diesem Zweck wird das gesamte Bremssystem in einem ersten Verfahrensschritt evakuiert, um in einem zweiten Verfahrensschritt das vorgesehene Druckmittel zuzuführen.

Es hat sich gezeigt, dass Wälzlageranordnungen von Motor-Pumpenaggregaten insbesondere während dem Druckmittelbefüllprozeß hohen, sowie wälzlageruntypischen Beanspruchungen ausgesetzt sind. Infolge einer wechselgerichteten Unter- beziehungsweise Überdruckbeaufschlagung kann es bei abgedichteten Wälzlagern beispielsweise zum Ausknöpfen von Dichtelementen wie Dichtlippen kommen. Dies wiederum kann zu Schmiermittelauswaschungen und folglich zu einer Verringerung der Pumpenlebensdauer führen. Die Lager versagen verfrüht, was insbesondere bei Bremssystemen mit hohen Pumpenlaufzeiten, wie insbesondere elektrohydraulischen Bremssystemen problematisch ist. Unabgedichtete Lager weisen einen freien Zugang zu den Wälzflächen auf, und erlauben nicht die Verwendung eines speziellen Schmierstoffes. Dies ist problematisch, wenn die Schmiereigenschaften des verwendeten Druckmittels nicht ausreichen, oder wenn das Druckmittel Verschleißprodukte enthält, welche eine Laufflächenschädigung bewirken können.

Die Erfindung beruht auf der Aufgabe, ein verbessertes Motor-Pumpen-Aggregat zur Verfügung zu stellen, bei dem die Gefahr von Lagerbeschädigungen und Schmiermittelauswaschungen aus Lagern reduziert ist.

Diese Aufgabe wird erfindungsgemäß bei einem gattungsgemäßen Motor-Pumpen-Aggregat zusammen mit den kennzeichnenden Merkmalen des Patentanspruchs 1 gelöst, indem ein abgedichtetes Lager sowie gewissermaßen ein Bypass zur Umgehung des Wälzlagerinnenraumes vorgesehen ist. Dadurch sind weder Schmiermittelauswaschungen noch Dichtmittelbeschädigungen zu befürchten. Im Ergebnis können abgedichtete Wälzlager Verwendung finden, welche gegen Schmierstoffauswaschungen geschützt sind. Dennoch wird ein schneller und damit kostengünstiger Druckmittelbefüllprozeß ermöglicht.

Bei einer bevorzugten Variante der Erfindung ist ein Kanal vorgesehen, welcher eine kurbelraumabgewandte Seite des Lagers mit einem Leckageablaufkanal für den Kurbelraum verbindet.

Eine vorteilhafte Ausgestaltung der Ausführungsform verfügt über einen Kanal, welcher in dem Aufnahmekörper vorgesehen ist.

Das aufnehmbare Leckagevolumen wird weiter erhöht, indem der Kanal in eine Kammer mündet, die von dem Lagerschild und dem Aufnahmekörper begrenzt wird, wobei die Kammer mit dem Leckageablaufkanal verbunden ist.

Weitere Merkmale, Vorteile und Einzelheiten der Erfindung ergeben sich aus der Zeichnung. In der Zeichnung zeigt
Fig. 1 einen Schnitt durch ein Motor-Pumpenaggregates in größerem Maßstab, zwecks Erläuterung
Fig. 2 eine Skizze zur schematischen Verdeutlichung der Lage von Exzenter und Kanal, zwecks Erläuterung, und
Fig. 3 eine Ausführungsform nach der Erfindung, bei der eine kurbelraumabgewandte Seite von einem Lager über einen Kanal mit einem Leckageablaufkanal in Verbindung steht.

Ein Motor-Pumpen-Aggregat 1 zum Einsatz in einem Kraftfahrzeugbremssystem ist einerseits an nicht dargestellte Radbremsen und andererseits an einen nicht dargestellten Geber wie beispielsweise einen Hauptbremszylinder mit einem Druckmittelvorratsbehälter angeschlossen. Zu diesem Zweck verfügt ein Aufnahmekörper 2 über wenigstens sechs hydraulische Anschlüsse. Das Aggregat ist insbesondere geeignet und bestimmt für elektrohydraulische Bremssysteme, welche über einen, an oder in dem Aufnahmekörper 2 integrierten Hochdruckspeicher verfügen, der zur Speisung der Radbremsen dient. Der Hauptbremszylinder wird hierbei nur im Notfall für die Bremsbetätigung herangezogen und dient primär der Simulation von Bremsbetätigungskräften.

Das Motor-Pumpen-Aggregat 1 enthält weiterhin eine Pumpe 3 zur Versorgung des Hochdruckspeichers oder zur Versorgung von Radbremsen sowie einen Motor 4 zum Antrieb der Pumpe 3. Eine Elektronikeinheit 14 zur Steuerung und Regelung des Systems befindet sich auf einer, dem Motor 4 gegenüberliegenden Seite des Aufnahmekörpers 2, wobei elektronische Steuer- und Versorgungsleitungen des Motors 4 durch den Aufnahmekörper 3 hindurchgeführt sind.

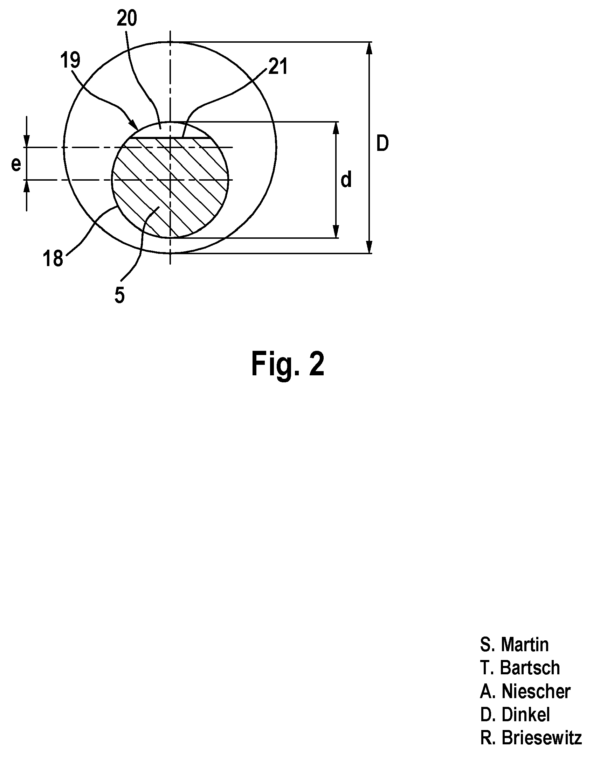

Der Motor 4 treibt eine Pumpenwelle 5 an, welche innerhalb einer gestuften Durchgangsbohrung 6 mittels abgedichteter Lager 7,8 drehbar angeordnet ist. Lager 7 ist als Festlager ausgebildet, während Lager 8 als Loslager ausgebildet ist, und daher keine Axialkräfte aufnehmen kann. Die Pumpenwelle 5 wirkt auf Verdrängungsmittel für das Druckmittel. Bei dem dargestellten, bevorzugten Ausführungsbeispiel handelt es sich um eine Radialkolbenpumpe, welche als Verdrängungsmittel über Pumpenkolben 9,10 verfügt, die in einen etwa mittig zwischen den Lagern 7,8 angeordneten Raum 11 einmünden, und von einem mit der Welle verbundenen Exzenter (zeichnerisch nicht dargestellt) angetrieben werden. Die Anzahl der Pumpenkolben ist prinzipiell beliebig, wobei 3 Kolben bevorzugt werden, weil dies Pulsationen und Geräuschentwicklung verringert. Zwischen Exzenter und Pumpenkolben 9,10 ist ein Wälzlager 12, insbesondere ein Nadellager zwecks Reibungsreduktion angeordnet. Um beispielsweise Druckmittel, welches sich in dem Raum 11 infolge innerer Leckage angesammelt hat, wieder dem System zur Verfügung zu stellen, (oder wenn der Raum 11 ohnehin mit Druckmittel geflutete ist) mündet in den Raum 11 ein Kanal 13, welcher mit dem Druckmittelvorratsbehälter in Verbindung steht. Ein motorabgewandtes Wellenende 15 reicht bis in einen Freiraum 16 und durchgreift einen Boden 17, der in die Durchgangsbohrung 6 eingefügt ist, und axial auf einem Außenring vom Lager 8 aufliegt. Zwischen Welle 5 und einer Durchgangsbohrung durch den Boden 17 befindet sich ein Spalt zum Durchlass von Druckmittel. Ein Innenring des Lager 8 ist im Schiebesitz auf einem wellenseitigen Lagersitz 18 angeordnet, und zwischen Raum 11 und Freiraum 16 befindet sich eine Verbindung 19. Nach dem Ausführungsbeispiel ist die Verbindung als Kanal 20 ausgeführt, wobei dessen Wandung aus Umfangsbereichen von Innenring und Lagersitz besteht. Zur Bildung des Kanals 20 weist der Lagersitz 18 eine Abflachung 21 auf, während der Innenring unverändert ringförmig ist, so dass zwischen diesen benachbarten Bauteilen ein sichelförmiger, freier Kanalquerschnitt zur pneumatischen Evakuierung und zum Druckmitteldurchtritt vorliegt. Exzentrizität und Kanal 20 sind für einen unverändert guten Lagersitz in Axialrichtung zueinander fluchtend angeordnet, wie es aus Fig. 2 hervorgeht. Mit anderen Worten befindet sich die Abflachung 21 im wesentlichen in derselben Winkelstellung, wie das Exzentermaximum (maximaler Hub), wie dies durch eine strichpunktierte Linie in Fig. 2 verdeutlicht ist. Weil die maximalen Lagerkräfte im Verdrängungshub auf der dem Exzentermaximum gegenüberliegenden Seite abgetragen werden (aus Sicht des Lagerinnenrings), erfolgt trotz Kanal 20 keine Verringerung der wirksamen, kraftübertragenden Fläche am Lagersitz. Lagersitzbeschädigungen sind dadurch ausgeschlossen.

Die Abflachung 21 kann prinzipiell ersetzt werden, indem Bohrungen vorgesehen sind, die sich durch das Welleninnere erstrecken.

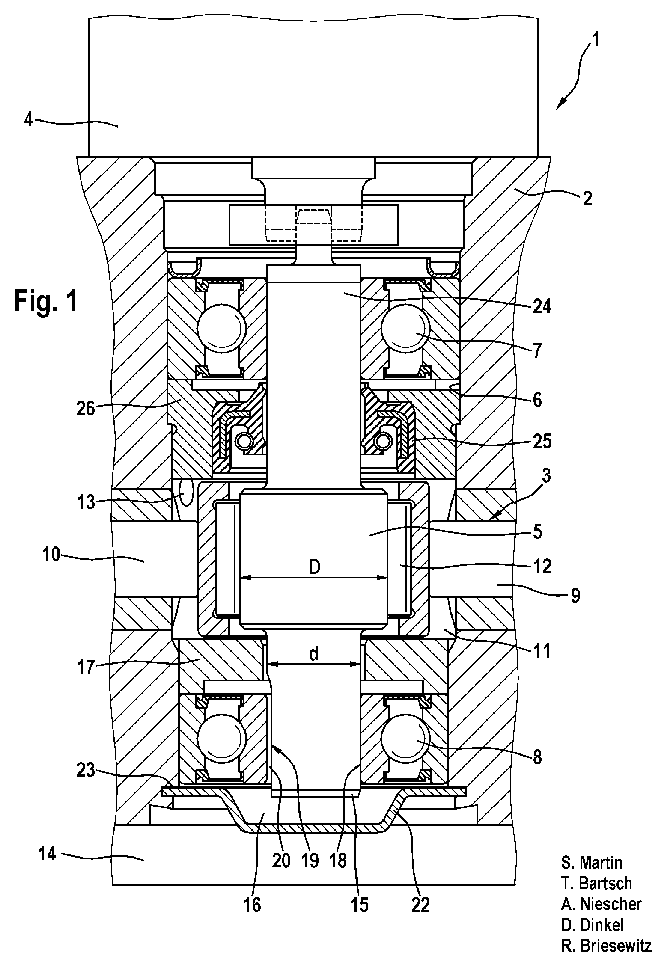

Wie aus Fig. 1 hervorgeht, ist der Freiraum 16 mit einem als Deckel ausgebildeten Verschluß 22 versehen, welcher einen Druckmittelverlust auf der Seite der Elektronikeinheit 14 verhindert. Der Deckel ist an eine Bohrungsstufe 23 der Durchgangsbohrung 6 aufgelegt und mit dem Aufnahmekörper 2 flüssigkeits- sowie gasdicht verstemmt. Zum Zweck der Abdichtung des Raumes 11 ist zwischen Exzenter und Lager 7 im Bereich des motorseitigen Wellenendes 24 ein Dichtelement 25 vorgesehen, das in einem Haltekörper 26 angeordnet ist, so dass keinerlei Leckageflüssigkeit aus dem Aufnahmekörper 2 in Richtung Motor 4 gelangen kann.

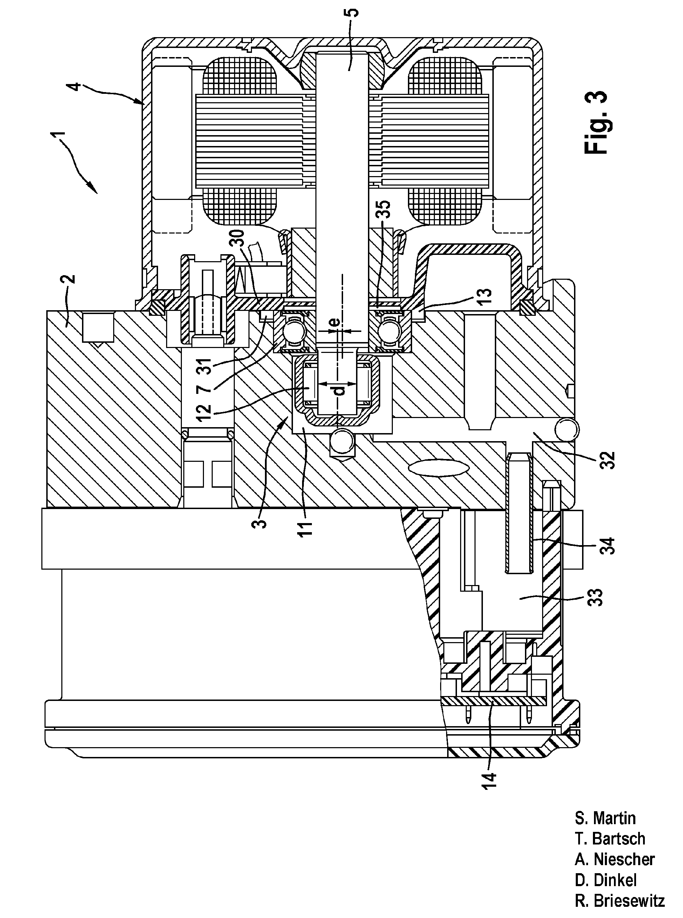

Der Fig. 3 ist eine fliegende Lagerung mit einem frei auskragenden Wellenende entnehmbar. Eine derartige fliegende Lagerung ist bei Motor-Pumpen-Aggregaten von Fahrzeugbremsanlagen weit verbreitet. Die bekannten Konstruktionen leiden unter dem Nachteil, daß wechselweise Erwärmungs- und Abkühlungsprozesse - insbesondere von dem Motor - gewissermaßen einen Ansaugvorgang bewirken können, so daß Leckageflüssigkeit, welche sich in dem Kurbelraum befindet, infolge einer Druckdifferenz in den Motorinnenraum gelangen kann. Eine Schädigung der Lagerschmierstofffüllung oder eine Schmierstoffausspülung wie auch eine Schädigung der Lagerdichtmittel ist möglich.

In der Fig. 3 sind mit Fig. 1 und 2 übereinstimmende Bauteile und Merkmale mit übereinstimmenden Bezugsziffern versehen. Von einer Wiederholung der diesbezüglichen Beschreibung wird abgesehen, um nachstehend detailliert auf Unterschiede eingehen zu können. Dem Pumpenantrieb dient eine Pumpenwelle 5 mit einem Exzenter, welcher in dem Kurbelraum 11 angeordnet ist. Zur Lagerung der Pumpenwelle 5 dient ein abgedichtetes Lager 7, das vor einem Lagerschild 30 des Motors 4 zwischen Kurbelraum 11 und Lagerschild 30 vorgesehen ist. Der Lagerschild 30 ist aus Kunststoffwerkstoff ausgebildet, verschließt das topfförmige Motorgehäuse und trägt das abgedichtete Lager 7 vor der Endmontage von Motor 4 und Aufnahmekörper 2 provisorisch, indem ein Ringstutzen 31 einen Teil des Lageraußenrings umgreift.

Der Kurbelraum 11 ist an einen Leckageablaufkanal 32 angeschlossen, welcher angesammelte Leckageflüssigkeit in eine Speicherkammer 33 des Aggregates 1 abführen, bevorraten, oder beispielsweise in die Umgebung ableiten kann. Um die Leckageflüssigkeit sicher in eine Speicherkammer 33 innerhalb der Elektronikeinheit 14 ableiten zu können, ohne einen Rücklauf von Leckageflüssigkeit oder Umgebungsflüssigkeiten in Richtung Kurbelraum 11 zu ermöglichen, kann der Aufnahmekörper 2 ein Röhrchen 34 aufweisen, welches in die Speicherkammer 33 hineinreicht, wobei eine Austrittsöffnung des Röhrchens 34 im Abstand zu dem freien Flüssigkeitspegel angeordnet ist.

Um weiterhin zu verhindern, daß Leckageflüssigkeit unter Auswaschung von Schmiermittel durch das abgedichtete Lager 7 hindurch oder infolge von Unterwanderung von Lagersitzen in einen Zwischenraum 35 hinter das Lager 7 und von dort in das Motorinnere gelangen kann, ist die kurbelraumabgewandte Seite des Lagers 7 über einen oder mehrere Kanäle 13 mit dem Leckageablaufkanal 32 verbunden. Zu diesem Zweck verfügt der Ringstutzen 31 über einen oder mehrere Kanäle 13, welche sich in Richtung auf den kurbelraumabgewandten Lagersitz in dem Lagerschild 30 erstrecken, so daß Kontakt zu dem Zwischenraum 35 herstellbar ist, der sich zwischen einer Schottwand des Lagerschildes 30 und der kurbelraumabgewandten Seite des Lagers 7 befindet. Jeder Kanal 13 verbindet diese kurbelraumabgewandte Seite mit dem Leckageablaufkanal 32, welcher Leckageflüssigkeit - die sich in dem Kurbelraum 11 und dem Zwischenraum 35 ansammeln kann - entweder in die Umgebung oder in die Speicherkammer 33 ableitet. Durch die beschriebenen Merkmale wird das Motorinnere im Bereich des Wellenaustritt gegen das Eindringen von Leckageflüssigkeit geschützt. Selbst wenn Leckageflüssigkeit durch das Lager 7 gelangen sollte, kann diese dem ohnehin vorgesehenen Leckagekreislauf zugeführt werden. Das System und insbesondere das Lager 7 ist unter pneumatischen Gesichtspunkten durch die Anbindung an die Umgebungsatmosphäre druckentlastet. Dadurch wird verhindert, daß Leckageflüssigkeit oder Umgebungsflüssigkeit unter der Wirkung eines Druckgefälle durch das Lager 7 in den Motorinnenraum gepresst wird. Ferner wird verhindert, daß sich Dichtscheiben des Lager 7 unter der Wirkung eines Druckgefälle ausknöpfen können.

Der Kanal 13 kann grundsätzlich auch als partielle Ausnehmung in dem Aufnahmekörper 2 vorgesehen sein, wie dies aus Fig. 3 hervorgeht. Prinzipiell kann der Kanal 13 ferner an einem Lageraußenring vorgesehen sein, was jedoch eine gesonderte Bearbeitung dieses standardisierten Bauteiles erfordert. Bei einer nicht gezeichneten, abgeänderten Ausführungsform sind die Kanäle 13 in dem Aufnahmekörper 2 vorgesehen.

Wie der Fig. 3 zu entnehmen ist, muß der Kanal 13 nicht unmittelbar in den Leckageablaufkanal 32 einmünden. Denn es kann eine Kammer zwischengeschaltet sein, die von dem Lagerschild 30 und dem Aufnahmekörper 2 begrenzt wird.

Ganz generell ermöglicht die Erfindung bei äußerst kompakter Bauweise einen stark verbesserten Schutz des Motors 4 gegenüber Leckageflüssigkeit unter Vermeidung von Resten von Wasser und/oder Leckageflüssigkeit (Bremsflüssigkeit) innerhalb des Aggregates.

Es versteht sich, dass die Erfindung bei vielfältigen Pumpentypen anwendbar ist, welche eine sogenannte innere Leckage aufweisen. Die Erfindung eignet sich prinzipiell auch zum Einsatz in Verbindung mit einer Zahnradpumpe, welche beispielsweise Innenzahnradpaare als Verdrängungsmittel aufweist.

### Bezugszeichenliste

- 1: Motor Pumpen Aggregat
- 2: Aufnahmekörper
- 3: Pumpe
- 4: Motor
- 5: Pumpenwelle
- 6: Durchgangsbohrung
- 7: Lager
- 8: Lager
- 9: Pumpenkolben
- 10: Pumpenkolben
- 11: Raum
- 12: Wälzlager
- 13: Kanal
- 14: Elektronikeinheit
- 15: Wellenende
- 16: Freiraum
- 17: Boden
- 18: Lagersitz
- 19: Verbindung

- 20: Kanal
- 21: Abflachung
- 22: Verschluß
- 23: Bohrungsstufe
- 24: Wellenende
- 25: Dichtelement
- 26: Haltekörper

- 30: Lagerschild
- 31: Ringstutzen
- 32: Leckageablaufkanal
- 33: Speicherkammer
- 34: Röhrchen
- 35: Zwischenraum

## Patentansprüche

**1.** Motor-Pumpen-Aggregat für ein Kraftfahrzeugbremssystem, mit einem Motor (4) und mit einer Pumpe (3), welche eine von dem Motor (4) angetriebene Welle (5) umfasst, deren Wellenende (15) in einem mit Ventilen und verbindenden Kanälen versehenen Aufnahmekörper (2) mit wenigstens einem Lager (7) drehbar gelagert ist, wobei die Welle (5) Verdrängungsmittel antreibt, die in einen Kurbelraum (11) reichen, und wobei das Lager (7) vor einem Lagerschild (30) des Motors (4) zwischen Kurbelraum (11) und Lagerschild (30) vorgesehen ist, **dadurch gekennzeichnet, dass** das Lager (7) abgedichtet ist, und dass wenigstens ein Kanal (13), insbesondere ein Bypass-Kanal, zur Druckentlastung des Lagers (7) vorgesehen ist.

**2.** Motor-Pumpen-Aggregat nach Anspruch 1, **dadurch gekennzeichnet, dass** der Kanal (13) eine kurbelraumabgewandte Seite des Lagers (7) mit einem Leckageablaufkanal (32) für den Kurbelraum (11) verbindet.

**3.** Motor-Pumpen-Aggregat nach Anspruch 1, **dadurch gekennzeichnet, dass** der Kanal (13) in dem Lagerschild (30) vorgesehen ist.

**4.** Motor-Pumpen-Aggregat nach Anspruch 1, **dadurch gekennzeichnet, dass** der Kanal (13) in dem Aufnahmekörper (2) vorgesehen ist.

**5.** Motor-Pumpen-Aggregat nach Anspruch 1, **dadurch gekennzeichnet, dass** der Kanal (13) an einem Lageraußenring vorgesehen ist.

**6.** Motor-Pumpen-Aggregat nach Anspruch 1, **dadurch gekennzeichnet, dass** das Lager (7) Dichtscheiben aufweist.

**4.** Motor-Pumpen-Aggregat nach Anspruch 2, **dadurch gekennzeichnet, dass** der Kanal (13) in eine Kammer mündet, die von dem Lagerschild (30) und dem Aufnahmekörper (2) begrenzt wird, und dass die Kammer mit dem Leckageablaufkanal (32) verbunden ist.
